(19) Europäisches Patentamt
European Patent Office
Office européen des brevets

(11) **EP 4 215 880 A1**

(12) **EUROPEAN PATENT APPLICATION**
published in accordance with Art. 153(4) EPC

(43) Date of publication:
**26.07.2023 Bulletin 2023/30**

(21) Application number: **21869350.5**

(22) Date of filing: **14.09.2021**

(51) International Patent Classification (IPC):
***G01F 1/66*** *(2022.01)*

(52) Cooperative Patent Classification (CPC):
**G01F 1/66**

(86) International application number:
**PCT/JP2021/033658**

(87) International publication number:
**WO 2022/059663 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2020 JP 2020155516**

(71) Applicant: **Kyocera Corporation**
**Kyoto-shi Kyoto 612-8501 (JP)**

(72) Inventors:
• **TODA Keisuke**
**Kyoto-shi, Kyoto 612-8501 (JP)**
• **KUDOU Shunsuke**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **MEASURING DEVICE, MEASURING SYSTEM, PROGRAM, AND CALIBRATION METHOD OF MEASURING DEVICE**

(57)    A measurement device includes a light emitter, a light receiver, and a computation processor. The light emitter irradiates, with light, an irradiation target having a fluid flowing in an internal space of the irradiation target. The light receiver receives coherent light including light scattered by the irradiation target and outputs a signal corresponding to an intensity of the coherent light. The computation processor generates a frequency spectrum for a temporal change in a signal strength of the signal output from the light receiver and calculates, based on the frequency spectrum, a calculation value for a flow state of the fluid flowing in the internal space of the irradiation target. The computation processor generates a first frequency spectrum of the signal output from the light receiver with the fluid in a first flow state, generates a second frequency spectrum of the signal output from the light receiver with the fluid in a second flow state in which the fluid has a flow rate lower than in the first flow state, and calculates a usable frequency range to calculate the calculation value based on a comparison between the first frequency spectrum and the second frequency spectrum.

FIG. 1

**Description**

TECHNICAL FIELD

The present disclosure relates to a measurement device, a measurement system, a program, and a calibration method for a measurement device.

BACKGROUND OF INVENTION

A known technique for quantitatively measuring the flow state of a fluid includes measuring the flow rate and the flow velocity of the fluid with an optical method using, for example, a laser blood flowmeter (refer to, for example, Japanese Patent No. 5806390).

SUMMARY

One or more aspects of the present disclosure are directed to a measurement device, a measurement system, a program, and a calibration method for a measurement device.

In one aspect, a measurement device includes a light emitter, a light receiver, and a computation processor. The light emitter irradiates, with light, an irradiation target having a fluid flowing in an internal space of the irradiation target. The light receiver receives coherent light including light scattered by the irradiation target and outputs a signal corresponding to an intensity of the coherent light. The computation processor generates a frequency spectrum for a temporal change in a signal strength of the signal output from the light receiver and calculates, based on the frequency spectrum, a calculation value for a flow state of the fluid flowing in the internal space of the irradiation target. The computation processor generates a first frequency spectrum of the signal output from the light receiver with the fluid in a first flow state, generates a second frequency spectrum of the signal output from the light receiver with the fluid in a second flow state in which the fluid has a flow rate lower than in the first flow state, and calculates a usable frequency range to calculate the calculation value based on a comparison between the first frequency spectrum and the second frequency spectrum.

In one aspect, a measurement system includes a light emitter, a light receiver, and a computation processor. The light emitter irradiates, with light, an irradiation target having a fluid flowing in an internal space of the irradiation target. The light receiver receives coherent light including light scattered by the irradiation target and outputs a signal corresponding to an intensity of the coherent light. The computation processor generates a frequency spectrum for a temporal change in a signal strength of the signal output from the light receiver and calculates, based on the frequency spectrum, a calculation value for a flow state of the fluid flowing in the internal space of the irradiation target. The computation processor generates a first frequency spectrum of the signal output from the light receiver with the fluid in a first flow state, generates a second frequency spectrum of the signal output from the light receiver with the fluid in a second flow state in which the fluid has a flow rate lower than in the first flow state, and calculates a usable frequency range to calculate the calculation value based on a comparison between the first frequency spectrum and the second frequency spectrum.

In one aspect, a program is executable by a processor included in a measurement device to cause the measurement device to function as the measurement device according to the above aspect.

In one aspect, a calibration method for a measurement device includes a first step and a second step. The first step includes receiving, with a light receiver, coherent light including light scattered by an irradiation target while irradiating, with a light emitter, the irradiation target having a fluid flowing in an internal space of the irradiation target in a first flow state with light, generating, with a computation processor, a first frequency spectrum for a temporal change in a signal strength of a signal corresponding to an intensity of the coherent light, receiving, with the light receiver, coherent light including light scattered by the irradiation target while irradiating, with the light emitter, the irradiation target having the fluid in the internal space of the irradiation target in a second flow state with light, the second state being a state in which the fluid has a flow rate lower than in the first flow state, and generating, with the computation processor, a second frequency spectrum for a temporal change in a signal strength of a signal corresponding to an intensity of the coherent light. The second step includes calculating, with the computation processor, a usable frequency range to calculate a calculation value for a flow state of the fluid flowing in the internal space of the irradiation target based on a comparison between the first frequency spectrum and the second frequency spectrum.

BRIEF DESCRIPTION OF THE DRAWINGS

FIG. 1 is a schematic block diagram of a measurement device according to a first embodiment.

FIG. 2 is a schematic partial cross-sectional view of the measurement device according to the first embodiment.

FIG. 3 is a graph showing an example frequency spectrum generated for a signal output from a light receiver at a low flow rate of a fluid, indicated by a curve Lo1 schematically with a thick line.

FIG. 4 is a graph showing an example frequency spectrum generated for a signal output from the light receiver at a high flow rate of the fluid, indicated by a curve Lo2 schematically with a thick line.

FIG. 5 is a graph showing an example first frequency spectrum generated for a signal output from the light receiver in a first flow state of the fluid, indicated by a curve Ln1 schematically with a dot-dash line.

FIG. 6 is a graph showing an example second frequency spectrum generated for a signal output from the light receiver in a second flow state of the fluid, indicated by a curve Ln2 schematically with a thick line.

FIG. 7 is a graph showing the first frequency spectrum indicated by the curve Ln1 in FIG. 5 and the second frequency spectrum indicated by the curve Ln2 in FIG. 6 together.

FIG. 8 is a graph showing another first frequency spectrum indicated by a curve Ln1A and another second frequency spectrum indicated by a curve Ln2A together.

FIG. 9 is a graph showing multiple example frequency spectra generated at different flow rates of the fluid, indicated by multiple curves schematically.

FIG. 10 is a graph showing a specific example of errors in flow rate calculation values calculated for eight different flow rate set values of the fluid.

FIG. 11 is a graph showing a reference example of errors in the flow rate calculation values calculated for the eight different flow rate set values of the fluid.

FIG. 12 is a flowchart of an example calibration operation of the measurement device according to the first embodiment.

FIG. 13 is a flowchart of an example flow measurement operation of the measurement device according to the first embodiment.

FIG. 14 is a schematic block diagram of a measurement device according to a second embodiment.

FIG. 15 is a schematic block diagram of a measurement device according to a third embodiment.

FIG. 16 is a schematic block diagram of a measurement system according to a fourth embodiment.

DESCRIPTION OF EMBODIMENTS

A known device for quantitatively measuring the flow state of a fluid (also referred to as a measurement device) measures at least one of the flow rate or the flow velocity of the fluid with an optical method using, for example, a laser blood flowmeter. The laser blood flowmeter can calculate the blood flow rate of a living body based on, for example, changes in the wavelength of a laser beam emitted from a laser device as a light emitter onto the living body. The wavelength changes due to a Doppler shift resulting from the laser beam scattered by the living body.

More specifically, a laser beam with a frequency fo incident on a living body is scattered by the blood flowing through blood vessels (moving particles such as blood cells) and by other fixed tissues (including skin tissue and tissue forming the blood vessels) to be scattered light. The diameter of blood cells ranges from, for example, several micrometers (μm) to about 20 μm. Unlike a portion of the scattered light scattered by the other fixed tissues having the frequency fo, a portion of the scattered light scattered by the blood cells has a frequency f changed by a frequency fb to a frequency fo + fb due to a Doppler shift corresponding to the movement speed of the particles such as blood cells. This modulated frequency fb is expressed with Formula 1 below, where V is the velocity of the blood flow, θ is the angle of incidence of a laser beam on the fluid, and λ is the wavelength of the laser beam.

$$\mathrm{fb} = (2\mathrm{V} \times \cos\theta)/\lambda \qquad\qquad (1)$$

Mutual interference between the light with the frequency fo scattered by the fixed tissues and the light with the frequency fo + fb scattered by the moving blood cells allows observation of the difference frequency fb as an optical beat (beat). In other words, an electric signal (light receiving signal) obtained with a photodetector receiving these two types of light with different frequencies contains a component of an electric signal (also referred to as an optical beat signal) corresponding to the optical beat resulting from the mutual interference between these two types of light.

The difference frequency fb corresponding to the frequency of the optical beat is far lower than the frequency fo of the laser beam first emitted. For example, light with a wavelength of 780 nm has a frequency of about 400 terahertz (THz), which exceeds the response speed detectable by a normal photodetector. In contrast, the frequency fb of the optical beat (also referred to as an optical beat frequency) is, for example, within the range of about several kilohertz (kHz) to about several tens of kHz and is within a frequency range fully responsive and detectable by a normal photodetector, although the frequency fb changes depending on the movement speed of the blood cells. Thus, the electric signal (light receiving signal) obtained with the photodetector receiving the light with the frequency fo scattered by the fixed tissues and the light with the frequency fo + fb scattered by the moving blood cells indicates a waveform containing a direct current (DC) component signal (DC signal) on which an intensity modulated signal with the optical beat frequency fb is superimposed. The optical beat signal with the frequency fb is analyzed to calculate the blood flow rate.

For example, a frequency spectrum P(f) for the light receiving signal detected by the photodetector is first calculated using computation such as a fast Fourier transform (FFT). The frequency spectrum P(f) is then weighted with the frequency f to calculate a weighted frequency spectrum P(f) × f. The weighted frequency spectrum P(f) × f is then integrated within a predetermined frequency range to calculate a first calculation value (f {P(f) × f}df). Subsequently, as in Formula 2 below, the first calculation value (f {P(f) × f}df) is divided by a second calculation value (∫P(f)df) calculated by integrating the frequency spectrum P(f) within the predetermined frequency range to calculate a mean frequency fm for the optical beat frequency fb.

$$fm = \int \{P(f) \times f\} df / \{\int P(f) df\} \qquad (2)$$

The mean frequency fm may then be used with a predetermined calculation to calculate the blood flow rate of a living body.

The measurement device for measuring the flow rate of a fluid may be used to measure, in addition to blood flowing through a blood vessel, any fluid flowing through a flow path in a section (also referred to as a flow path component) defining the flow path such as a pipe.

The frequency spectrum P(f) may include, for example, a noise component from an external environment of a fluid different from the flow of the fluid. Examples of noise from the external environment may include noise caused by vibrations of the flow path component and electromagnetic noise caused by various processing circuits in the measurement device. Noise from the external environment thus lowers the measurement accuracy in measuring the flow rate of a fluid with the measurement device.

This occurs commonly with any measurement technique for measuring values quantitatively indicating the flow state of a fluid including at least one of the flow rate or the flow velocity of the fluid, rather than with the measurement device that measures the flow rate of a fluid alone.

Measurement of values quantitatively indicating the flow state of a fluid is thus to be improved to achieve higher measurement accuracy.

The inventors of the present disclosure have developed a technique for improving the measurement accuracy of values quantitatively indicating the flow state of a fluid.

First to fourth embodiments associated with the technique will now be described with reference to the drawings. In the drawings, the same reference numerals denote the components having the same or similar structures and functions, and such components will not be described repeatedly. The drawings are schematic.

1. First Embodiment

1-1. Structure of Measurement Device

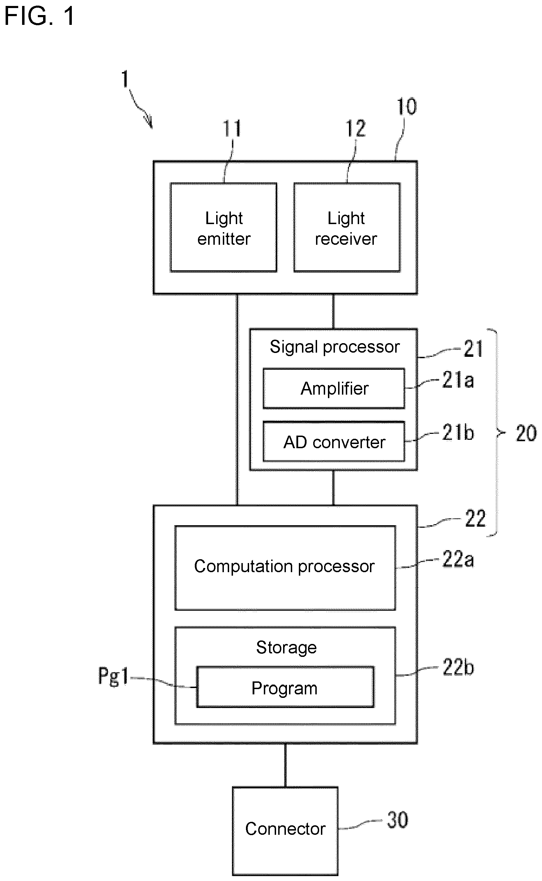

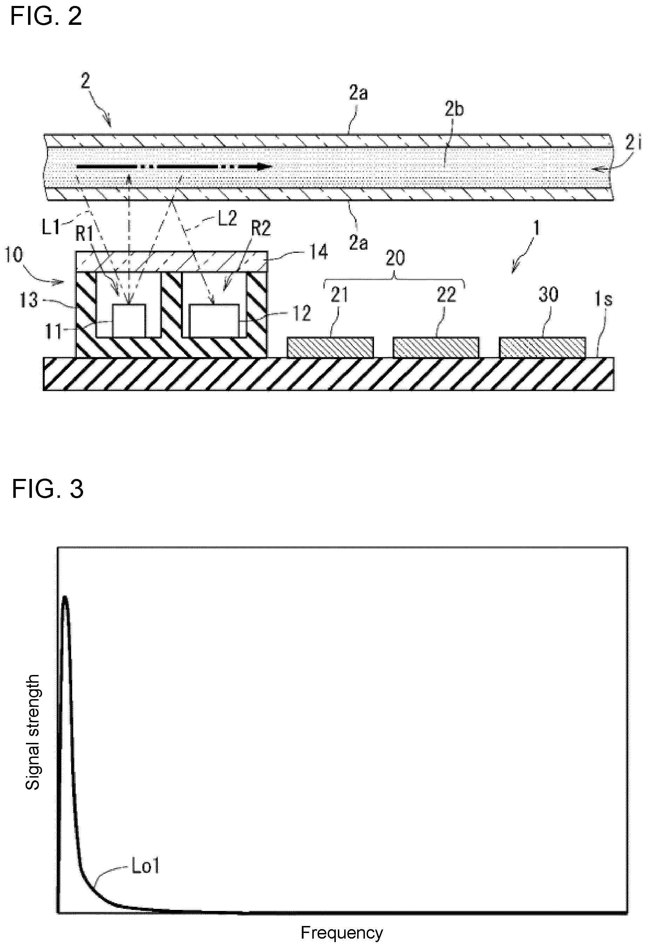

As illustrated in FIGs. 1 and 2, a measurement device 1 according to a first embodiment can measure, for example, values (also referred to as flow quantitative values) quantitatively indicating the flow state of a fluid 2b flowing in an internal space 2i of an object (also referred to as a flow path component) 2a defining a flow path. The flow path component 2a may include, for example, a tubular object (also referred to as a tubular body) such as a blood vessel in a living body or a pipe in any of various devices. The flow quantitative values may include, for example, at least one of the flow rate or the flow velocity. The flow rate is the quantity of a fluid passing through a flow path per unit time. The quantity of the fluid may be expressed in, for example, volume or mass. The flow velocity is the velocity of the fluid flowing through the flow path. The flow velocity may be expressed with a distance by which the fluid flows per unit time.

The measurement device 1 according to the first embodiment can measure the flow quantitative values quantitatively indicating the flow state of the fluid 2b with, for example, the Doppler effect for light. When, for example, light incident on the fluid 2b is scattered by the fluid 2b, the Doppler effect corresponding to the flow of the fluid 2b causes a frequency shift (also referred to as a Doppler shift) of the light corresponding to the movement speed of the fluid 2b. The measurement device 1 can measure the flow quantitative values quantitatively indicating the flow state of the fluid 2b with this Doppler shift. The components of the measurement device 1 (described later) can be manufactured with, for example, any known methods as appropriate.

The fluid 2b as a target (also referred to as a measurement target) for which the flow quantitative values are measured may be a fluid 2b that scatters light or a fluid 2b that allows a substance or an object that scatters light (also referred to as a scatter substance or a scatterer) to flow through the fluid. More specifically, examples of the fluid 2b as a measurement target include water, blood, printer ink, and gas containing a scatterer such as powder. For a scatter substance or a scatterer flowing with the fluid, the flow rate of the scatter substance or the scatterer may be used as the flow rate of the fluid, and the flow velocity of the scatter substance or the scatterer may be used as the flow velocity of the fluid.

As illustrated in FIGs. 1 and 2, the measurement device 1 includes, for example, a sensor 10 and a controller 20. The measurement device 1 also includes a connector 30.

The sensor 10 includes, for example, a light emitter 11 and a light receiver 12.

The light emitter 11 can irradiate, for example, with light (also referred to as irradiation light) L1, an object (also referred to as an irradiation target) 2 that allows the fluid 2b to flow in the internal space 2i. The irradiation target 2 includes at least an object (flow path component) 2a defining a flow path such as a tubular body, and the fluid 2b flowing through the flow path. The irradiation light L1 may be, for example, light having a predetermined wavelength as appropriate for the fluid 2b as a measurement target. For the fluid 2b being blood, for example, the irradiation light L1 having a wavelength set to about 600 to 900 nanometers (nm) is used. For the fluid 2b being printer ink, for example, the irradiation target 2 is irradiated with light having a wavelength set to about 700 to 1000 nm. The light emitter 11 may be, for example, a semiconductor laser device, such as a vertical-cavity surface-emitting laser (VCSEL).

The light receiver 12 can receive, for example, coherent light L2 including a portion of irradiation light L1 scattered by the irradiation target 2. The light receiver 12 can convert, for example, the received light to an electric signal (simply referred to as a signal, as appropriate) corresponding to the light intensity. In other words, the light receiver 12 can receive coherent light L2 including light scattered by the irradiation target 2 and output a signal corresponding to the intensity of the coherent light L2. Of the scattered light from the irradiation target 2, coherent light L2 that can be received by the light receiver 12 includes, for example, scattered light without a Doppler shift from an object that is stationary around the fluid 2b (also referred to as a stationary object) and scattered light with a Doppler shift with a wavelength shift fb from the fluid 2b. For the fluid 2b being blood flowing through a blood vessel, for example, the stationary object includes an object (flow path component) 2a including the skin and the blood vessel. For the fluid 2b being ink flowing through a pipe, for example, the stationary object includes an object (flow path component) 2a defining a flow path for the fluid 2b including the pipe. The pipe may be made of, for example, a light-transmissive material. Examples of the light-transmissive material include glass and a polymer resin.

A change in the intensity of coherent light L2 with time (also referred to as a temporal change) can indicate, for example, a beat of the frequency corresponding to a difference (also referred to as a difference frequency) fb between the frequency of the scattered light without a Doppler shift and the frequency of the scattered light with a Doppler shift. Thus, the signal corresponding to the intensity of the coherent light L2 output from the light receiver 12 can contain a component of a signal corresponding to the beat (also referred to as a beat signal or an optical beat signal) with respect to the temporal change in the intensity of the coherent light L2. The light receiver 12 may be, for example, any device that can follow the beat (also referred to as having time resolution) with respect to the temporal change in the intensity of the coherent light L2. The wavelength of light that can be received by the light receiver 12 can be set based on measurement conditions such as the wavelength of irradiation light L1 and the velocity range of the fluid 2b. The light receiver 12 may be, for example, a silicon (Si) photodiode, a gallium arsenide (GaAs) photodiode, an indium gallium arsenide (InGaAs) photodiode, or a germanium (Ge) photodiode.

The sensor 10 may also include a package 13. The package 13 accommodates the light emitter 11 and the light receiver 12. In the example of FIG. 2, the measurement device 1 includes a board (also referred to as a mounting board) 1s on which the sensor 10, the controller 20, and the connector 30 are mounted. The mounting board 1s is, for example, a printed circuit board. For example, the package 13 in the sensor 10 is located on the mounting board 1s. The mounting board 1s electrically connects, for example, the sensor 10 to the controller 20 and the controller 20 to the connector 30.

The package 13 has, for example, a cubic or rectangular parallelepiped external shape. The package 13 includes, for example, a first recess R1 and a second recess R2 open upward. The first recess R1 receives the light emitter 11. The second recess R2 receives the light receiver 12. For example, irradiation light L1 emitted from the light emitter 11 is incident on the irradiation target 2 through the opening of the first recess R1. For example, coherent light L2 from the irradiation target 2 is received by the light receiver 12 through the opening of the second recess R2. The package 13 may be, for example, a multilayered wiring board made of a ceramic material or an organic material. Examples of the ceramic material include sintered aluminum oxide and sintered mullite. Examples of the organic material include an epoxy resin and a polyimide resin.

As illustrated in, for example, FIG. 2, the openings of the first recess R1 and the second recess R2 in the package 13 may be covered with a light-transmissive cover 14. This structure can hermetically seal the light emitter 11 in the first recess R1 in the package 13 and the light receiver 12 in the second recess R2 in the package 13. The cover 14 may be, for example, a glass plate.

The controller 20 can control, for example, the measurement device 1. The controller 20 includes multiple electronic components including an active element such as a transistor or a diode and a passive element such as a capacitor. The connector 30 can electrically connect, for example, the controller 20 to external devices. For example, multiple electronic components may be integrated into one or more integrated circuits (ICs) or large-scale integration circuits (LSIs), or multiple ICs or LSIs may be further integrated to implement various functional units including the controller 20 and the connector 30. Multiple electronic components serving as the controller 20 and the connector 30 are mounted on, for example, the mounting board 1s. Thus, for example, the package 13 is electrically connected to the controller 20, and the controller 20 is electrically connected to the connector 30.

The controller 20 includes, for example, a signal processor 21 and an information processor 22.

The signal processor 21 can perform, for example, various processes on an electric signal received from the light receiver 12. Examples of these processes may include conversion of an electric signal to a voltage, separation of an electric signal into an alternating current (AC) component and a DC component, amplification of the strength of an electric signal (also referred to as amplification), and conversion of an analog signal to a digital signal (also referred to as AD conversion). The signal processor 21 functions as, for example, a unit (also referred to as an amplifier) 21a that can amplify a signal. The signal processor 21 includes, for example, an amplifier circuit to function as the amplifier 21a. An electric signal output from the light receiver 12 contains, for example, a DC component and an AC component. Thus, for example, the signal processor 21 may separate the electric signal output from the light receiver 12 into the DC component and the AC component and then amplify the AC component signal with the amplifier 21a. The signal processor 21 may also function as, for example, a unit (also referred to as an AD converter) 21b that performs AD conversion on a signal output from the light receiver 12. The signal processor 21 includes, for example, an analog-to-digital conversion circuit (AD conversion circuit) to function as the AD converter 21b. A sampling rate (also referred to as a sampling frequency) in the AD converter 21b may be set or changed as appropriate in response to, for example, a signal from the information processor 22.

The signal processor 21 may include, for example, circuits such as a current-voltage conversion circuit (I-V conversion circuit), an AD conversion circuit serving as the AD converter 21b, an AC-DC separation circuit (AC-DC decoupling circuit), and an amplifier circuit serving as the amplifier 21a. The signal processor 21 can thus perform, for example, processes such as amplification and AD conversion on an analog electric signal received from the light receiver 12, and then output a digital signal to the information processor 22.

The information processor 22 includes, for example, a computation processor 22a and a storage 22b.

The computation processor 22a includes, for example, a processor serving as an electric circuit. The processor may include, for example, one or more processors, a controller, a microprocessor, a microcontroller, an application-specific integrated circuit (ASIC), a digital signal processor, a programmable logic device, a combination of any of these devices or components, or a combination of any other known devices or components.

The storage 22b includes, for example, a random-access memory (RAM) and a read-only memory (ROM). The storage 22b stores, for example, firmware containing a program Pg1. The computation processor 22a can perform computation or processing on one or more pieces of data in accordance with the firmware stored in the storage 22b. In other words, for example, the computation processor 22a executes the program Pg1 to implement various functions of the measurement device 1. The information processor 22 can thus control, for example, the operation of the light emitter 11 and the light receiver 12. The program Pg1 is stored in a non-transitory computer-readable storage medium (storage 22b). The non-transitory computer-readable storage medium storing the program Pg1 may be a portable storage medium such as an optical disk, a magnetic disk, or a nonvolatile memory. In this case, for example, the portable storage medium may be attached to a device, such as a disk drive or a memory reader, that is connected to the connector 30 and can read data. The program Pg1 may be stored into the portable storage medium.

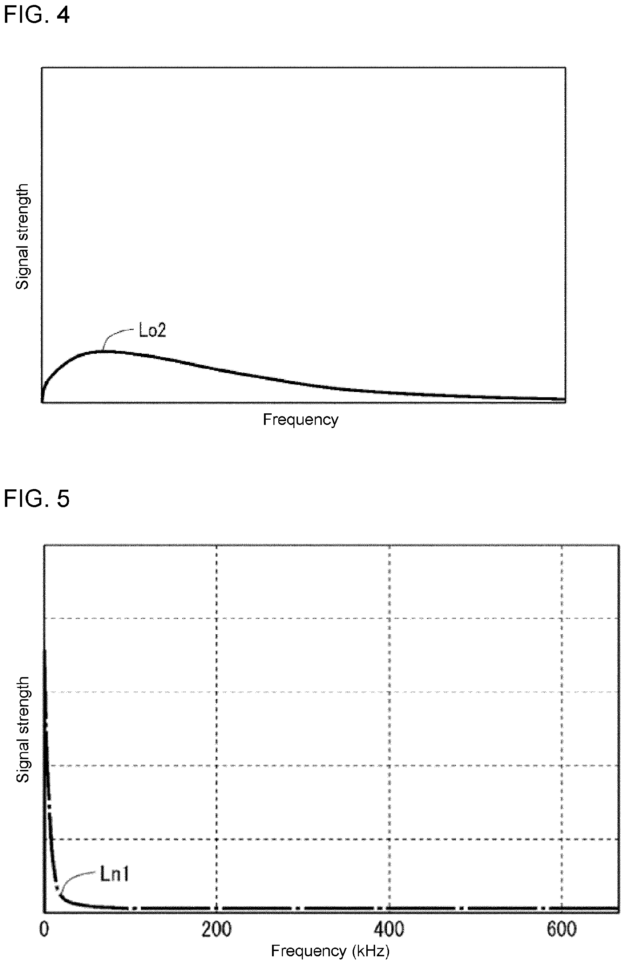

The frequency and the signal strength of an electric signal output from, for example, the light receiver 12 vary depending on the Doppler effect for light. Thus, the frequency spectrum P(f) showing the relationship between the frequency and the strength of the electric signal changes based on the flow quantitative value (the flow rate or the flow velocity) of the fluid 2b. For example, with the fluid 2b flowing in the internal space 2i of the flow path component 2a at a low flow rate, the flow velocity of the fluid 2b is low overall, and the signal strength tends to be notably higher in a narrow range of relatively low frequencies in the frequency spectrum P(f) as shown in FIG. 3. In contrast, for example, with the fluid 2b flowing in the internal space 2i of the flow path component 2a at a high flow rate, the flow velocity of the fluid 2b tends to be high in areas distant from the inner surface of the flow path component 2a and decrease toward the inner surface of the flow path component 2a due to the resistance of the inner surface. Thus, the signal strength tends to be higher in a wide range from relatively low frequencies to relatively high frequencies in the frequency spectrum P(f) as shown in, for example, FIG. 4.

The information processor 22 can thus perform, for example, computation to measure a flow quantitative value quantitatively indicating the flow state of the fluid 2b based on the electric signal output from the light receiver 12 and processed by the signal processor 21 with the computation processor 22a. In other words, the measurement device 1 can perform, for example, measurement (also referred to as flow measurement) of the flow quantitative value for the fluid 2b. The computation processor 22a can calculate a power spectrum (also referred to as a frequency spectrum) P(f) showing the distribution of the signal strength for each frequency for a change over time (temporal change) in the signal strength of, for example, the signal output from the light receiver 12. In other words, the computation processor 22a can generate the frequency spectrum P(f) for the temporal change in the signal strength of, for example, the signal output from the light receiver 12. More specifically, the computation processor 22a can calculate the frequency spectrum P(f) for the temporal change in the signal strength of, for example, a signal including an AC component obtained from the signal processor 21 performing various processes on the signal output from the light receiver 12. The frequency spectrum P(f) may be generated by, for example, performing analysis with computation such as a Fourier transform on the temporal change in the strength of the signal including the AC component output from the signal processor 21. The Fourier transform may be, for example, an FFT. The computation processor 22a can then calculate a value indicating the flow state of the fluid 2b flowing in the irradiation target 2 (also referred to as a flow calculation value) based on, for example, the generated frequency spectrum P(f). The computation processor 22a can then calculate a flow quantitative value quantitatively indicating the flow state of the fluid 2b based on, for example, the calculated flow calculation value.

The computation processor 22a can calculate, for example, a frequency range (also referred to as a usable frequency range) used to calculate the flow calculation value in the frequency range of the frequency spectrum P(f). The usable frequency range may be calculated by the computation processor 22a in, for example, calibrating the measurement device 1. The measurement device 1 may be calibrated in response to, for example, an electric signal input from any device such as an external device connected to the connector 30. The calculated usable frequency range may be set by the computation processor 22a as, for example, a frequency range to calculate the flow calculation value.

Calibration of Measurement Device

To calibrate the measurement device 1, for example, the quantitative value for the flow state of the fluid 2b in the flow path component 2a is to be controllable with a device (also referred to as a flow controller) such as a pump. The operation of the flow controller may be controlled in response to, for example, a signal from an external device as appropriate. The flow state of the fluid 2b in the internal space 2i of the flow path component 2a is set to, for example, a first state (also referred to as a first flow state) and to a second state (also referred to as a second flow state) in this order. The flow rate of the fluid 2b in the first flow state is higher than the flow rate of the fluid 2b in the second flow state. In other words, the flow rate of the fluid 2b in the second flow state is lower than the flow rate of the fluid 2b in the first flow state. The first flow state is, for example, a state in which the flow rate of the fluid 2b is set to a maximum value in a range (also referred to as a controllable range) in which the flow rate is controllable. The second flow state is, for example, a state in which the flow rate of the fluid 2b is set to zero. For example, the measurement device 1 is calibrated, and then the measurement device 1 is calibrated using the fluid 2b as a target for flow measurement performed by the measurement device 1. The controllable range is, for example, a range in which the flow rate of the fluid 2b in the flow path component 2a is controllable with the flow controller.

For the fluid 2b in the first flow state, for example, the computation processor 22a can generate a frequency spectrum (also referred to as a first frequency spectrum) P1(t) of a signal output from the light receiver 12. The first frequency spectrum P1(f) shown in, for example, FIG. 5 may be obtained. The timing at which the first frequency spectrum P1(f) is generated may be controlled, for example, in response to a signal from an external device through the connector 30.

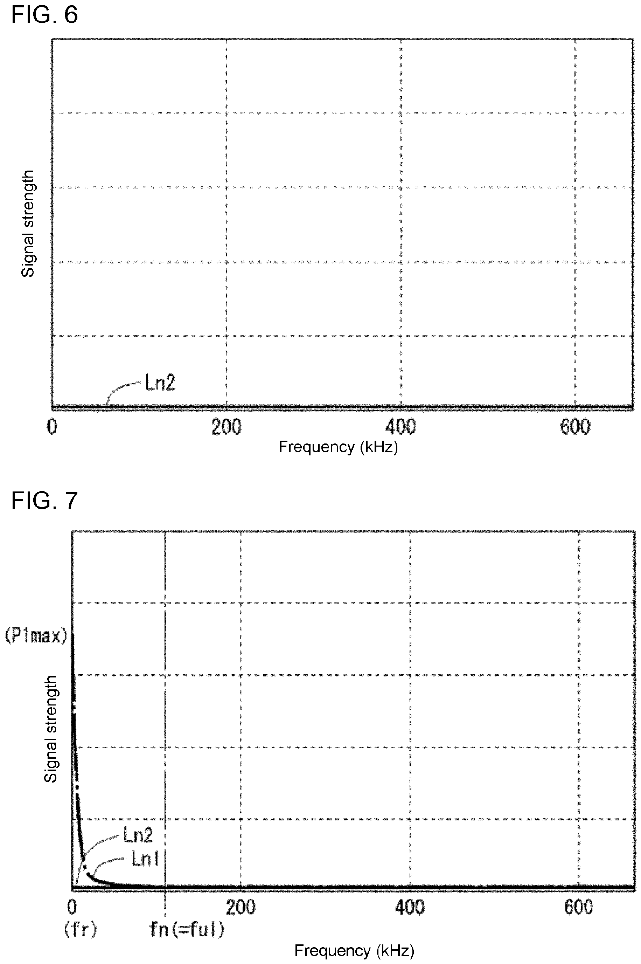

For the fluid 2b in the second flow state, for example, the computation processor 22a can generate a frequency spectrum (also referred to as a second frequency spectrum) P2(f) of the signal output from the light receiver 12. The second frequency spectrum P2(f) shown in, for example, FIG. 6 may be obtained. The timing at which the second frequency spectrum P2(f) is generated may be controlled, for example, in response to a signal from an external device through the connector 30. Either the first frequency spectrum P1 (f) or the second frequency spectrum P2(f) may be generated first.

The computation processor 22a can calculate the usable frequency range based on, for example, a comparison between the first frequency spectrum P1(f) and the second frequency spectrum P2(f). In this example, the computation processor 22a performs, for example, a comparison (also referred to as a signal strength comparison) between the first frequency spectrum P1(f) and the second frequency spectrum P2(f). In the signal strength comparison, a value to be an index for comparison (also referred to as a comparison index value) Vc is calculated based on, for example, the first frequency spectrum P1(f) and the second frequency spectrum P2(f). The comparison index value Vc may be calculated, for each frequency, by dividing the difference in the signal strength between the first frequency spectrum P1(f) and the second frequency spectrum P2(f) ($|P1(f) - P2(f)|$) by a specific value Vs, as in Formula 3, for example. In other words, for example, the ratio of the difference in the signal strength between the first frequency spectrum P1(f) and the second frequency spectrum P2(f) to the specific value Vs may be calculated for each frequency as the comparison index value Vc. A frequency ful defining the upper limit of the usable frequency range (this frequency is also referred to as an upper limit frequency) may be calculated based on, for example, a frequency fn at which the comparison index value Vc is less than a predetermined value Vp (this frequency is also referred to as a similar signal frequency). The similar signal frequency fn is, for example, a frequency at which the signal strength of the first frequency spectrum P1(f) and the signal strength of the second frequency spectrum P2(f) are sufficiently close to each other. In this example, the usable frequency range is a frequency range lower than or equal to the upper limit frequency ful.

$$Vc = |P1(f) - P2(f)|/Vs \qquad (3)$$

The specific value Vs is, for example, a specific signal strength (also referred to as a first specific signal strength) P1x of the first frequency spectrum P1(f). The specific signal strength P1x is, for example, a maximum value of the signal strength in the first frequency spectrum P1(f) (also referred to as a first maximum signal strength) P1max or an average value of the signal strength in the first frequency spectrum P1(f) (also referred to as a first average signal strength) P1ave. The predetermined value Vp may be set to a value corresponding to, for example, the type or the characteristics of the fluid 2b. The predetermined value Vp may be, for example, 0.00015. The similar signal frequency fn is, for example, any frequency at which the comparison index value Vc is less than the predetermined value Vp after a reference frequency fr is added to the frequency f. The reference frequency fr is the frequency indicating the first maximum signal strength P1max in the first frequency spectrum P1(f). The upper limit frequency ful in the usable frequency range may be, for example, the same as the similar signal frequency fn or a frequency obtained by performing a calculation based on a preset calculation rule on the similar signal frequency fn. The calculation based on the calculation rule may include, for example, addition of a preset value, addition of a value calculated in a predetermined calculation using the similar signal frequency fn, multiplication by a preset value, or multiplication by a value calculated in a predetermined calculation using the similar signal frequency fn.

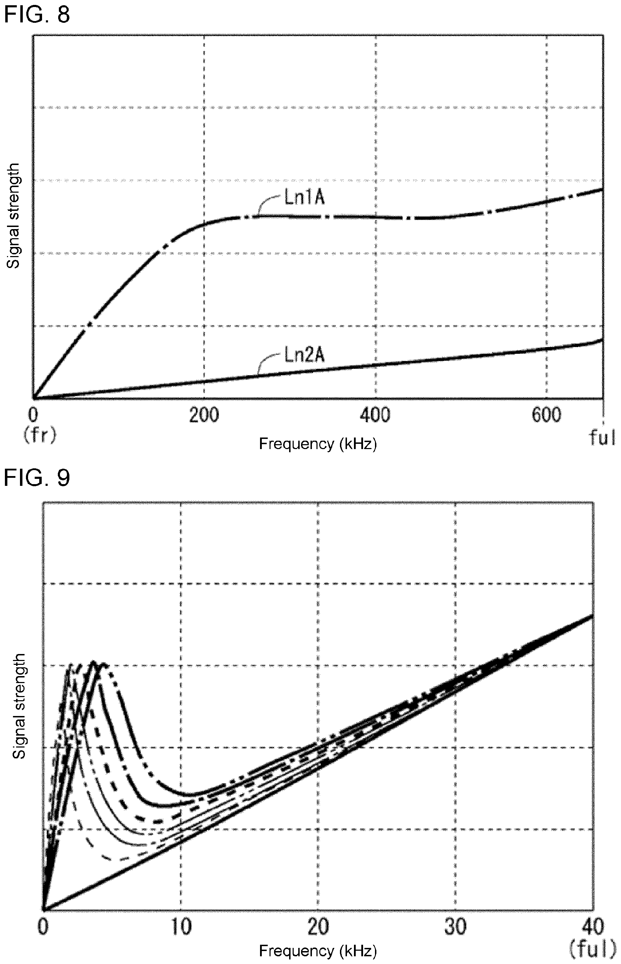

Through this computation process, the similar signal frequency fn as a frequency at which the first frequency spectrum P1(f) and the second frequency spectrum P2(f) are sufficiently close to each other may be calculated as shown in FIG. 7, for example. In the example of FIG. 7, the similar signal frequency fn is the upper limit frequency ful. As shown in FIG. 8, for example, when no similar signal frequency fn is calculated through the computation process performed by the computation processor 22a, the maximum value in the frequency range of the frequency spectrum P(f) that can be generated by the measurement device 1 may be set as the upper limit frequency ful in the usable frequency range. For example, the sampling rate in the AD converter 21b may be set to its maximum value, and a maximum value in the frequency range of the frequency spectrum P(f) that can be generated by the measurement device 1 may be set to a frequency half the sampling rate. At the maximum sampling rate of, for example, 1324 kHz, the maximum value in the frequency range of the frequency spectrum P(f) that can be generated by the measurement device 1 is 662 kHz.

The usable frequency range calculated in the manner described above is used to, for example, calculate the flow calculation value for the fluid 2b based on the frequency spectrum P(f) generated for the signal output from the light receiver 12 and processed by the signal processor 21 in the flow measurement performed by the measurement device 1 that has been calibrated. The computation processor 22a can thus calculate the flow calculation value based on information about frequencies at which the signal strength may notably change based on a change in the flow quantitative value for the fluid 2b in calculating the flow calculation value for the flow state of the fluid 2b based on the frequency spectrum P(f).

FIG. 9 shows frequency spectra P(f) each generated by the computation processor 22a for the fluid 2b flowing in the internal space 2i of the flow path component 2a with different flow rates, indicated by curves schematically. FIG. 9 shows the multiple frequency spectra P(f) each generated for the fluid 2b flowing in the internal space 2i of the flow path component 2a with the flow rate set to 0 (zero) milliliters per minute (ml/min), 50 ml/min, 100 ml/min, 150 ml/min, 200 ml/min, 250 ml/min, and 300 ml/min, indicated by the curves schematically. In the graph, the frequency spectrum P(f) generated for the fluid 2b with the flow rate of 0 ml/min is indicated by the curve schematically with a thick line. The frequency spectrum P(f) generated for the fluid 2b with the flow rate of 50 ml/min is indicated by the curve schematically with a thin dashed line. The frequency spectrum P(f) generated for the fluid 2b with the flow rate of 100 ml/min is indicated by the curve schematically with a thin dot-dash line. The frequency spectrum P(f) generated for the fluid 2b with the flow rate of 150 ml/min is indicated by the curve schematically with a thin two-dot-dash line. The frequency spectrum P(f) generated for the fluid 2b with the flow rate of 200 ml/min is indicated by the curve schematically with a thick dashed line. The frequency spectrum P(f) generated for the fluid 2b with the flow rate of 250 ml/min is indicated by the curve schematically with a thick dot-dash line. The frequency spectrum P(f) generated for the fluid 2b with the flow rate of 300 ml/min is indicated by the curve schematically with a thick two-dot-dash line.

In the example of FIG. 9, for the fluid 2b flowing in the internal space 2i of the flow path component 2a with the different flow rates, the signal strength changes in the frequency range of 40 kHz or less in the frequency range of the frequency spectra P(f). In this case, an upper limit frequency fu1 defining the upper limit of the usable frequency range may be set to, for example, about 40 kHz. In this example, the component of the signal strength at frequencies exceeding the usable frequency range in the frequency spectrum P(f) seems to mainly include a noise component from an external environment of the fluid 2b different from the flow of the fluid 2b. Examples of noise from the external environment may include noise caused by vibrations of the flow path component 2a and electromagnetic noise caused by various processing circuits in the measurement device 1.

As described above, for example, the usable frequency range may be calculated and set, and the calculation value for the flow state of the fluid 2b may then be calculated using a frequency spectrum P(f) in which noise components in the frequency band exceeding the usable frequency range are reduced. This may improve, for example, the measurement accuracy of a value quantitatively indicating the flow state of the fluid 2b. This may also improve the measurement accuracy of a value quantitatively indicating the flow state of the fluid 2b in measuring, for example, the fluid 2b with a low reflectance.

In the first flow state being, for example, a state in which the flow rate of the fluid 2b is set to the maximum value in the controllable range, the usable frequency range may include the frequency band in which the signal strength of the frequency spectrum P(f) is more likely to change when the flow rate of the fluid 2b changes by a great value. This may improve the measurement accuracy of a value quantitatively indicating the flow state of the fluid 2b with, for example, a relatively high flow rate.

In the second flow state being, for example, a state in which the flow rate of the fluid 2b is set to zero, the second frequency spectrum P2(f) is less likely to include a signal strength that corresponds to a change in the flow rate of the fluid 2b. This may cause, for example, the difference between the first frequency spectrum P1(f) and the second frequency spectrum P2(f) to be notable. This may allow, for example, the upper limit frequency fu1 in the usable frequency range to be easily calculated.

The computation processor 22a may convert, for example, the first frequency spectrum P1(f) into a form of an approximation and calculate the usable frequency range based on a comparison between the first frequency spectrum P1(f) converted into the form of the approximation and the second frequency spectrum P2(f). This may reduce, for example, the amount of data about the first frequency spectrum P1(f), thus reducing the use of the storage capacity of the storage 22b for storing the first frequency spectrum P1(f). This may, for example, reduce the storage capacity of the storage 22b and improve the processing speed of the computation processor 22a. The approximation of the first frequency spectrum P1(f) may be calculated by, for example, the computation processor 22a using the least squares method or other methods. More specifically, for example, the relationship between the frequency and the signal strength is expressed by a quadratic equation ($y = a1 \times x^2 + b1 \times x + c1$) including coefficients a1 and b1 and a constant c1, where x is the frequency, and y is the signal strength. The quadratic equation as the approximation of the first frequency spectrum P1(f) may be calculated by determining the coefficients a1 and b1 and the constant c1 by fitting the quadratic equation to the raw data about the first frequency spectrum P1(f) using, for example, the least squares method. An approximation using, for example, various forms of functions using powers or indices may be calculated instead of the quadratic equation. To avoid discontinuity that may result from the DC component at lower frequencies in the first frequency spectrum P1(f), for example, the computation processor 22a may not use data below a predetermined frequency in the first frequency spectrum P1(f) in calculating the approximation of the first frequency spectrum P1(f). The predetermined frequency may be set to, for example, a frequency within a range from about 10 to 40 kHz as appropriate based on the type and the characteristics of the fluid 2b.

The computation processor 22a may convert, for example, the second frequency spectrum P2(f) into a form of an approximation and calculate the usable frequency range based on a comparison between the second frequency spectrum P2(f) converted into the form of the approximation and the first frequency spectrum P1(f). This may reduce, for example, the amount of data about the second frequency spectrum P2(f), thus reducing the use of the storage capacity of the storage 22b for storing the second frequency spectrum P2(f). This may, for example, reduce the storage capacity of the storage 22b and improve the processing speed of the computation processor 22a. The approximation of the second frequency spectrum P2(f) may be calculated by, for example, the computation processor 22a using the least squares method or other methods. More specifically, for example, the relationship between the frequency and the signal strength is expressed by a quadratic equation ($y = a2 \times x^2 + b2 \times x + c2$) including coefficients a2 and b2 and a constant c2, where x is the frequency, and y is the signal strength. The quadratic equation as the approximation of the second frequency spectrum P2(f) may be calculated by determining the coefficients a2 and b2 and the constant c2 by fitting the quadratic equation to the raw data about the second frequency spectrum P2(f) using, for example, the least squares method. An approximation using, for example, various forms of functions using powers or indices may be calculated instead of the quadratic equation. To avoid discontinuity that may result from the DC component at lower frequencies in the second frequency spectrum P2(f), for example, the computation processor 22a may not use data below a predetermined frequency in the second frequency spectrum P2(f) in calculating the approximation of the second frequency spectrum P2(f). The predetermined frequency may be set to, for example, a frequency within a range from about 10 to 40 kHz as appropriate based on the type and the characteristics of the fluid 2b.

The computation processor 22a may calculate the sampling rate in the AD converter 21b based on, for example, the calculated usable frequency range. The sampling rate is calculated to be, for example, a frequency twice the usable frequency range. When, for example, the usable frequency range is 40 kHz, the sampling rate may be calculated to be 80 kHz. The computation processor 22a may set the sampling rate in the AD converter 21b to, for example, the calculated sampling rate. This structure allows, for example, the sampling rate for the flow measurement to be changed based on the usable frequency range through calibration of the measurement device 1. This may improve the frequency resolution of the frequency spectrum P(f) generated in calculating, for example, the flow calculation value in the usable frequency range. This may improve, for example, the measurement accuracy of a value quantitatively indicating the flow state of the fluid 2b.

Flow Measurement

The computation processor 22a generates, using computation such as an FFT, a frequency spectrum (also referred to as a third frequency spectrum) P3(f) showing the distribution of the signal strength for each frequency for a temporal change in the signal strength of, for example, the signal output from the light receiver 12. In other words, the computation processor 22a generates, for example, the third frequency spectrum P3(f) for the temporal change in the strength of the signal output from the light receiver 12. For example, the computation processor 22a calculates the third frequency spectrum P3(f) for a temporal change in the strength of a signal obtained by, for example, amplification and AD conversion of the signal output from the light receiver 12 with the signal processor 21. The frequency range in the third frequency spectrum P3(f) may be set based on, for example, the sampling rate in the AD converter 21b.

The computation processor 22a calculates a value for the flow state of the fluid 2b flowing in the internal space 2i of the irradiation target 2 based on, for example, the third frequency spectrum P3(f). The computation processor 22a first weights, for example, the third frequency spectrum P3(f) with a frequency f to calculate a weighted frequency spectrum (also referred to as a fourth frequency spectrum) P4(f) (= P3(f) $\times$ f). Subsequently, the computation processor 22a calculates, for example, the integrated value ($\int${P3(f) $\times$ f}df) of the signal strength for the fourth frequency spectrum P4(f) (= P3(f) $\times$ f) and the integrated value (JP3(f)df) of the signal strength for the third frequency spectrum P3(f). The integration is performed, for example, in the usable frequency range described above. The computation processor 22a then calculates, for example, the mean frequency fm corresponding to the difference frequency fb by dividing the integrated value ($\int${P3(f) $\times$ f}df) of the signal strength for the fourth frequency spectrum P4(f) (= P3(f) $\times$ f) by the integrated value (JP3(f)df) of the signal strength for the third frequency spectrum P3(f). The computation processor 22a can then calculate the value quantitatively indicating the flow state of the fluid 2b (flow quantitative value) based on, for example, the mean frequency fm calculated as described above and serving as the flow calculation value. This allows, for example, the measurement device 1 to measure the value quantitatively indicating the flow state of the fluid 2b flowing in the internal space 2i of the flow path component 2a.

For example, the computation processor 22a can calculate the flow quantitative value for the fluid 2b based on the flow calculation value (e.g., the mean frequency fm) and prepared calibration data (also referred to as a calibration curve). For example, with the calibration data about the flow rate of the fluid 2b being prepared, the flow rate of the fluid 2b may be calculated based on the flow calculation value (e.g., the mean frequency fm) and the calibration curve for the flow rate serving as the flow quantitative value. For example, with the calibration data about the flow velocity of the fluid 2b being prepared, the flow velocity of the fluid 2b may be calculated based on the mean frequency fm and the calibration curve for the flow velocity serving as the flow quantitative value. This allows calculation of at least one of the flow rate or the flow velocity of the fluid 2b.

For example, the calibration data may be prestored in the storage 22b before the flow quantitative value for the fluid 2b is measured. The calibration data may be stored in the form of, for example, a functional formula or a table.

The calibration data may be prepared by, for example, the measurement device 1 calculating the mean frequency fm, which serves as the flow calculation value, for the fluid 2b flowing through the flow path component 2a at a known flow quantitative value. The calculation of the mean frequency fm performed by the measurement device 1 involves irradiating, with the light emitter 11, the irradiation target 2 with irradiation light L1, receiving, with the light receiver 12, coherent light L2 including light scattered by the irradiation target 2, and calculating the mean frequency fm with the computation processor 22a. The measurement device 1 may calculate, for example, the mean frequency fm for the fluid 2b flowing through the flow path component 2a at a known flow quantitative value, and derive calibration data based on the relationship between the known flow quantitative value and the calculated mean frequency fm. More specifically, for example, the derived calibration data may include an operation expression (calibration curve) including the mean frequency fm as a parameter.

For example, the calibration curve is expressed with Formula 4 including coefficients a and b and a constant c, where y is the flow quantitative value, and x is the mean frequency fm.

$$y = a \times x^2 + b \times x + c \qquad (4)$$

When, for example, the mean frequency fm for the fluid 2b flowing through the flow path component 2a at a known flow quantitative value y1 is calculated as a value x1, the mean frequency fm for the fluid 2b flowing through the flow path component 2a at a known flow quantitative value y2 is calculated as a value x2, and the mean frequency fm for the fluid 2b flowing through the flow path component 2a at a known flow quantitative value y3 is calculated as a value x3, Formulas 5, 6, and 7 below are obtained.

$$y1 = a \times x1^2 + b \times x1 + c \qquad (5)$$

$$y2 = a \times x2^2 + b \times x2 + c \qquad (6)$$

$$y3 = a \times x3^2 + b \times x3 + c \qquad (7)$$

The coefficients a and b and the constant c are calculated from Formulas 5, 6, and 7. The calculated coefficients a and b and constant c are substituted into Formula 4 to obtain the calibration data indicating the calibration curve.

The functional formula representing the calibration curve may be, for example, expressed in a polynomial expression including an n-th order (where n is a natural number greater than or equal to 2) term including y as the flow quantitative value and x as the mean frequency fm being a variable. The functional formula representing the calibration curve may include, for example, at least one term selected from the term of logarithm and the term of exponentiation of the variable x as the mean frequency fm.

Specific Examples

Results of the calibration and the flow measurement using the measurement device 1 according to the first embodiment will now be described using a specific example.

In the example, a cylindrical tube made of a fluororesin with an outer diameter of 6 millimeters (mm) and an inner diameter of 4 mm were used as a pipe being the flow path component 2a. The fluid 2b was transparent clear paint.

For the calibration of the measurement device 1, the flow rate of the fluid 2b was set to 300 ml/min, which was the maximum value in the controllable range, for the first flow state and to 0 ml/min for the second state. The upper limit frequency ful in the usable frequency range was calculated as 40 kHz.

In the flow measurement performed by the measurement device 1, the upper limit frequency ful in the usable frequency range was set to 40 kHz, and the flow rate of the fluid 2b flowing in the internal space 2i of the flow path component 2a was controlled to eight different set values (also referred to as flow rate set values) with a pump connected to the flow path component 2a. The eight different flow rate set values were 50 ml/min, 75 ml/min, 100 ml/min, 125 ml/min, 150 ml/min, 200 ml/min, 250 ml/min, and 300 ml/min. With the flow rate of the fluid 2b flowing in the internal space 2i of the flow path component 2a set to each of the eight flow rate set values, the third frequency spectrum P3(f) of the signal output from the light receiver 12 was calculated using a Fourier transform. For each flow rate set value, the mean frequency fm serving as the flow calculation value was calculated by dividing the integrated value (f{P3(f) × f}df) of the signal strength for the fourth frequency spectrum P4(f) (= P3(f) × f) obtained by weighting the third frequency spectrum P3(f) with the frequency f by the integrated value (JP3(f)df) of the signal strength for the third frequency spectrum P3(f). The frequency range for the integration was limited to less than or equal to 40 kHz. The flow rate of the fluid 2b serving as the flow quantitative value (also referred to as the flow rate calculation value) was then calculated, for each flow rate set value, based on the calculated mean frequency fm and the calibration curve for the flow rate serving as the flow quantitative value.

In a reference example, the upper limit frequency ful in the usable frequency range was set to 662 kHz, which was the maximum value to be set, and the mean frequency fm serving as the flow calculation value and the flow rate calculation value were sequentially calculated for each flow rate set value with the measurement device 1.

In the specific example and the reference example, the percentage for the error in the flow rate calculation value from the flow rate set value was calculated for each flow rate set value by dividing the value obtained by subtracting the flow rate set value from the flow rate calculation value by the flow rate set value and multiplying 100.

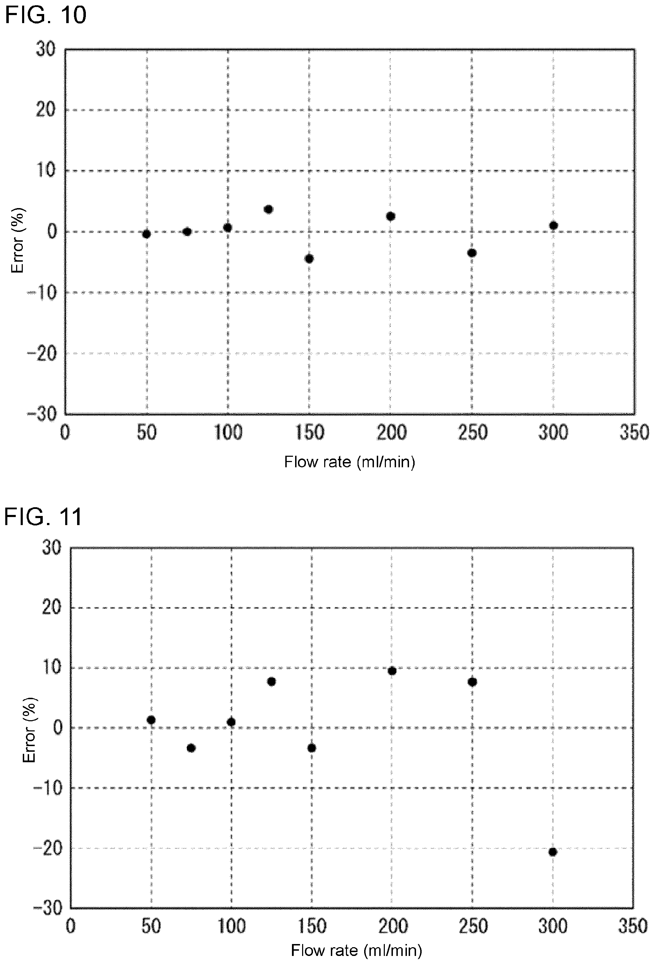

FIG. 10 shows the percentage of the errors in the flow rate calculation values calculated for the eight different flow rate set values of the fluid in the specific example. FIG. 11 shows the percentage of the errors in the flow rate calculation values calculated for the eight different flow rate set values of the fluid in the reference example.

The percentage of the maximum error was about -20.6% in the reference example as shown in FIG. 11, whereas the percentage of the maximum error was about -4.4% in the specific example as shown in FIG. 10. This shows that the error in the flow rate calculation value from the flow rate set value is reduced by appropriately setting the upper limit frequency ful in the usable frequency range. In other words, the measurement accuracy of a value quantitatively indicating the flow state of the fluid 2b can be improved by appropriately setting the upper limit frequency ful in the usable frequency range.

1-2. Operation of Measurement Device

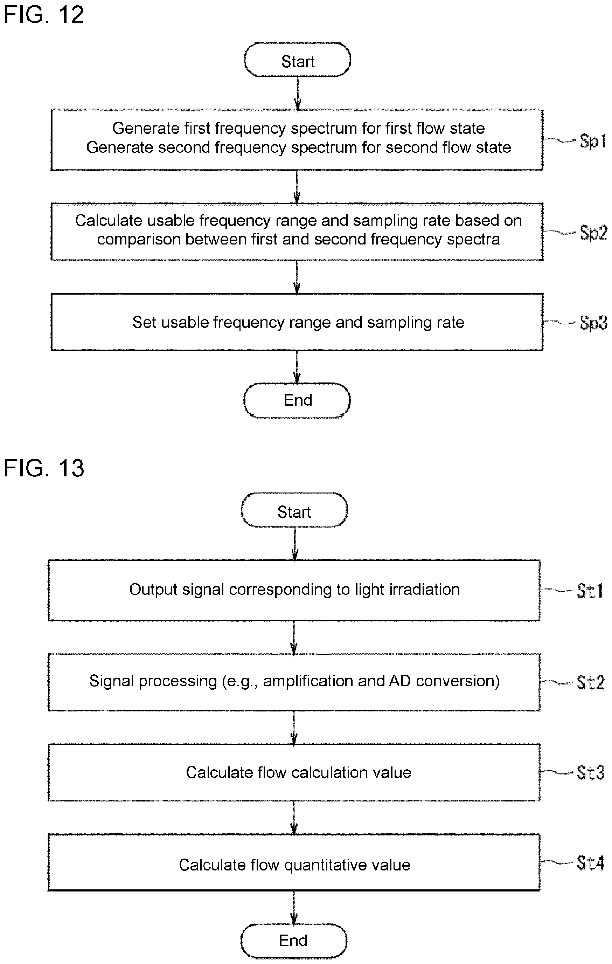

The operation of the measurement device 1 for calibration (also referred to as calibration operation) will now be described using an example. FIG. 12 is a flowchart of an example calibration operation of the measurement device 1. This calibration operation is an operation example defining a calibration method for the measurement device 1. The operation can be performed by, for example, the computation processor 22a executing the program Pg1 and the controller 20 controlling the operation of the measurement device 1. The processing in steps Sp1 to Sp3 in FIG. 12 may be performed in this order in response to, for example, electric signals input from any device such as an external device connected to the connector 30.

In step Sp1 in FIG. 12, a first process is performed. In the first process, for example, while the irradiation target 2 having the fluid 2b flowing in the internal space 2i in the first flow state is being irradiated with light (irradiation light) L1 by the light emitter 11, the light receiver 12 receives coherent light L2 including light scattered by the irradiation target 2, and the computation processor 22a generates the frequency spectrum (first frequency spectrum) P1(f) for a temporal change in the strength of a signal corresponding to the intensity of the coherent light L2. The flow state of the fluid 2b is set to the first flow state with, for example, a pump (flow controller) connected to the flow path component 2a. Then, in response to, for example, signals from an external device, the light emitter 11 emits irradiation light L1, the light receiver 12 receives coherent light L2, and the computation processor 22a generates the first frequency spectrum P1(f).

In the first process, for example, while the irradiation target 2 having the fluid 2b flowing in the internal space 2i in the second flow state is being irradiated with light (irradiation light) L1 by the light emitter 11, the light receiver 12 receives coherent light L2 including light scattered by the irradiation target 2, and the computation processor 22a generates the frequency spectrum (second frequency spectrum) P2(f) for a temporal change in the strength of a signal corresponding to the intensity of the coherent light L2. The flow state of the fluid 2b is set to the second flow state with, for example, a pump (flow controller) connected to the flow path component 2a. Then, in response to, for example, signals from an external device, the light emitter 11 emits irradiation light L1, the light receiver 12 receives coherent light L2, and the computation processor 22a generates the second frequency spectrum P2(f). In the first process, either the first frequency spectrum P1(f) for the first flow state or the second frequency spectrum P2(f) for the first flow state may be generated first.

In step Sp2, a second process is performed. In the second process, for example, the computation processor 22a calculates the usable frequency range to calculate the calculation value for the flow state of the fluid 2b flowing in the internal space 2i of the irradiation target 2 based on a comparison between the first frequency spectrum P1(f) and the second frequency spectrum P2(f). The computation processor 22a performs, for example, a comparison (signal strength comparison) between the first frequency spectrum P1(f) and the second frequency spectrum P2(f). In the signal strength comparison, for example, a value to be an index for comparison (comparison index value) Vc is calculated based on the first frequency spectrum P1(f) and the second frequency spectrum P2(f). For example, the comparison index value Vc may be calculated, for each frequency, by dividing the difference in the signal strength between the first frequency spectrum P1(f) and the second frequency spectrum P2(f) by a specific value Vs. Then, a frequency (upper limit frequency) ful defining the upper limit of the usable frequency range may be calculated based on, for example, a frequency (similar signal frequency) fn at which the comparison index value Vc is less than a predetermined value Vp. The usable frequency range may be calculated using the calculated upper limit frequency fu1. The specific value Vs is, for example, a specific signal strength (first specific signal strength) P1x of the first frequency spectrum P1(f). The specific signal strength P1x is, for example, a maximum value of the signal strength of the first frequency spectrum P1(f) (first maximum signal strength) P1max or an average value of the signal strength of the first frequency spectrum P1(f) (first average signal strength) P1ave. The predetermined value Vp may be set to a value corresponding to, for example, the type or the characteristics of the fluid 2b. The similar signal frequency fn is, for example, any frequency at which the comparison index value Vc is less than the predetermined value Vp after a reference frequency fr is added to the frequency f. The reference frequency fr is the frequency indicating the first maximum signal strength P1max in the first frequency spectrum P1(f). The upper limit frequency ful in the usable frequency range may be, for example, the same as the similar signal frequency fn or a frequency obtained by performing a calculation based on a preset calculation rule on the similar signal frequency fn. The calculation based on the calculation rule may include, for example, addition of a preset value, addition of a value calculated in a predetermined calculation using the similar signal frequency fn, multiplication by a preset value, or multiplication by a value calculated in a predetermined calculation using the similar signal frequency fn.

In the second process, the computation processor 22a may calculate the sampling rate in the AD converter 21b based on, for example, the usable frequency range. The sampling rate may be calculated to be, for example, a frequency twice the usable frequency range.

In step Sp3, a third process is performed. In the third process, for example, the computation processor 22a sets the usable frequency range calculated in step Sp2 as a frequency range to calculate the flow calculation value in flow measurement performed by the measurement device 1. In the third process, for example, the computation processor 22a may set the sampling rate in the AD converter 21b to the sampling rate calculated in step Sp2.

The operation of flow measurement (also referred to as a flow measurement operation) performed by the measurement device 1 will now be described using an example. FIG. 13 is a flowchart of an example flow measurement operation of the measurement device 1. The operation can be performed by, for example, the computation processor 22a executing the program Pg1 and the controller 20 controlling the operation of the measurement device 1. The processing in steps St1 to St4 in FIG. 13 may be performed in this order in response to, for example, electric signals input from any device such as an external device connected to the connector 30.

In step St1 in FIG. 13, for example, while the irradiation target 2 having the fluid 2b flowing in the internal space 2i is being irradiated with light by the light emitter 11, the light receiver 12 receives coherent light L2 including light scattered by the irradiation target 2 and outputs a signal corresponding to the intensity of the coherent light L2.

In step St2, for example, the signal processor 21 processes the signal output from the light receiver 12 in step St1. The signal processor 21 performs, for example, processes such as amplification and AD conversion on an analog electric signal received from the light receiver 12, and then outputs a digital signal to the information processor 22. The signal processor 21 may perform, for example, other processes. For example, the signal processor 21 may separate the electric signal output from the light receiver 12 into DC and AC components and then amplify the AC component signal with the amplifier 21a. With the sampling rate in the AD converter 21b set in the calibration of the measurement device 1, for example, the AD converter 21b performs AD conversion based on the sampling rate.

In step St3, for example, the computation processor 22a calculates a value for the flow state of the fluid 2b flowing in the internal space 2i of the irradiation target 2 (flow calculation value) based on the signal output from the signal processor 21 in step St2. In this step, for example, the frequency spectrum (third frequency spectrum) P3(f) is first generated for a temporal change in the strength of the signal output from the light receiver 12 in step St1. More specifically, for example, the computation processor 22a generates, with computation such as a Fourier transform, the third frequency spectrum P3(f) of the signal obtained in the process performed by the signal processor 21 in step St2. Examples of the Fourier transform may include an FFT. The computation processor 22a then calculates the flow calculation value for the flow state of the fluid 2b flowing in the internal space 2i of the irradiation target 2 based on, for example, the third frequency spectrum P3(f). For example, the computation processor 22a may calculate the mean frequency fm serving as the flow calculation value by dividing the integrated value ($f\{P3(f) \times f\}df$) of the signal strength for the fourth frequency spectrum P4(f) ($= P3(f) \times f$) obtained by weighting the third frequency spectrum P3(f) with the frequency f by the integrated value ($fP3(f)df$) of the signal strength for the third frequency spectrum P3(f).

In step St4, for example, the computation processor 22a calculates a value quantitatively indicating the flow state of the fluid 2b (flow quantitative value) based on the flow calculation value (e.g., the mean frequency fm) calculated in step St3. For example, the computation processor 22a may calculate the flow quantitative value for the fluid 2b based on the flow calculation value (e.g., the mean frequency fm) and prepared calibration data (calibration curve). This may allow, for example, the measurement device 1 to measure the value quantitatively indicating the flow state of the fluid 2b flowing in the internal space 2i of the flow path component 2a. The flow quantitative value includes, for example, at least one of the flow rate or the flow velocity of the fluid 2b.

1-3. Overview of First Embodiment

The measurement device 1 according to the first embodiment calculates the usable frequency range to calculate the flow calculation value for the flow state of the fluid 2b flowing in the internal space 2i of the irradiation target 2 based on, for example, a comparison between the first frequency spectrum P1(f) for the fluid 2b in the first flow state and the second frequency spectrum P2(f) for the fluid 2b in the second flow state. This may allow, for example, the flow calculation value for the flow state of the fluid 2b to be calculated using the frequency spectrum P(f) in which noise components in the frequency band exceeding the usable frequency range are reduced. This may improve, for example, the measurement accuracy of a value quantitatively indicating the flow state of the fluid 2b. This may also improve the measurement accuracy of a value quantitatively indicating the flow state of the fluid 2b in measuring, for example, the fluid 2b with a low reflectance.

2. Other Embodiments

The present disclosure is not limited to the first embodiment and may be changed or varied in various manners without departing from the spirit and scope of the present disclosure.

2-1. Second Embodiment

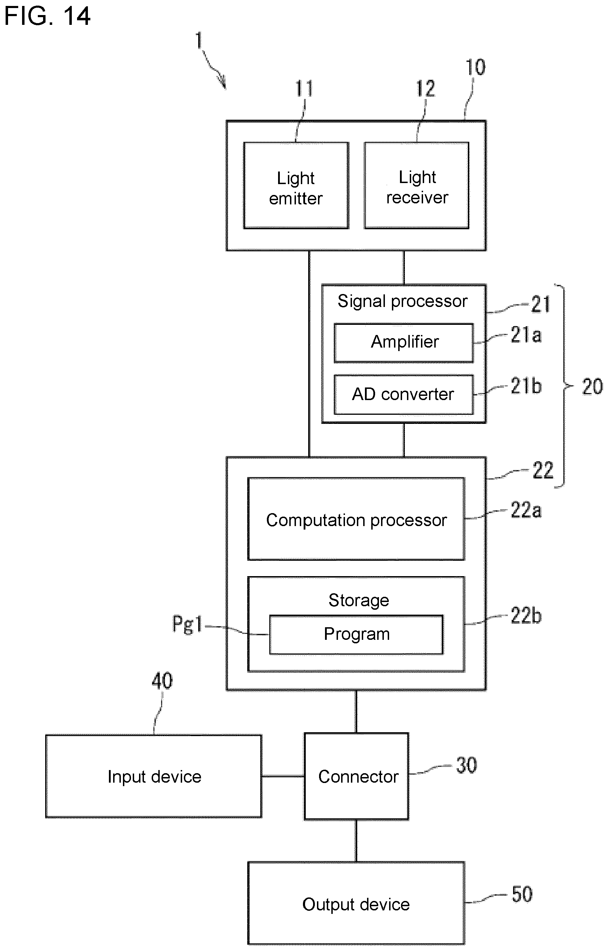

In the first embodiment, the measurement device 1 may include, for example, an input device 40 and an output device 50 as illustrated in FIG. 14.

The input device 40 is connectable to, for example, the controller 20 through the connector 30. In response to, for example, the operation of a user, the input device 40 can input information about various conditions (also referred to as measurement conditions) for flow measurement performed by the measurement device 1 into the controller 20. The measurement conditions may include, for example, the frequency range in the frequency spectrum calculated by the computation processor 22a, the light amount or intensity of irradiation light L1 emitted from the light emitter 11, the period in which the light receiver 12 outputs a signal, the sampling rate in the AD converter 21b, an operation expression for calibration data, and a coefficient of the operation expression. Examples of the input device 40 include an operation unit such as a keyboard, a mouse, a touchscreen, and a switch, and a microphone for voice input. The input device 40 allows, for example, a user to easily set intended measurement conditions. This may improve the user convenience of the measurement device 1. The input device 40 may also allow input of various items of information about the fluid 2b such as the viscosity or the concentration of the fluid 2b, or the size of a scatterer in the fluid 2b.

The output device 50 is connectable to, for example, the controller 20 through the connector 30. The output device 50 may include, for example, a display that visually outputs various items of information about flow measurement or a speaker that audibly outputs various items of information about flow measurement. Examples of the display include a liquid crystal display and a touchscreen. For the input device 40 including a touchscreen, a single touchscreen may be used to function as the displays of the input device 40 and the output device 50. The measurement device 1 with this structure includes fewer components, has a smaller size, and facilitates manufacture. The output device 50 may visually output, for example, the flow calculation value calculated by the computation processor 22a. This allows a user to easily view the flow calculation value for the flow state of the fluid 2b. The output device 50 may also visually output, for example, the flow quantitative value calculated by the computation processor 22a. This allows a user to easily view the flow quantitative value for the flow state of the fluid 2b such as the flow rate or the flow velocity. For example, the output form of various items of information in the output device 50 may be changed by a user through the input device 40. The change in the output form may include, for example, a change in the display form and switching of displayed information. This allows a user to easily view the various items of information about measurements of, for example, the flow calculation value and the flow quantitative value. This may improve the user convenience of the measurement device 1.

When, for example, the output device 50 can visually output the usable frequency range calculated by the computation processor 22a, the computation processor 22a may set the usable frequency range to calculate the flow calculation value in response to the user inputting information about the usable frequency range through the input device 40.

When, for example, the output device 50 can visually output the sampling rate calculated by the computation processor 22a, the computation processor 22a may set the sampling rate in the AD converter 21b in response to the user inputting information about the sampling rate through the input device 40.

2-2. Third Embodiment

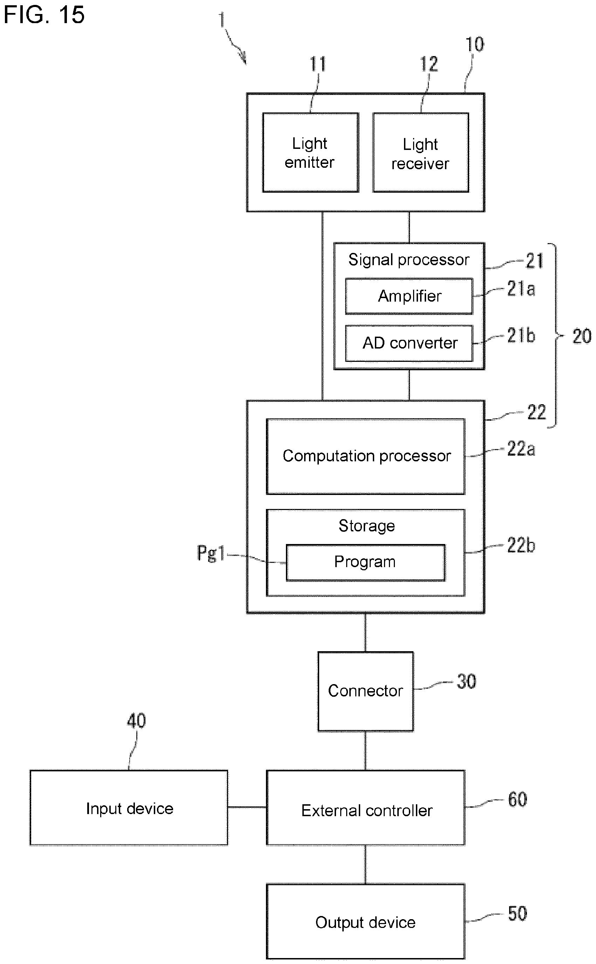

In each of the above embodiments, the measurement device 1 may further include, for example, an external controller 60 as illustrated in FIG. 15. The external controller 60 may include, for example, a computer such as a microcomputer.

The external controller 60 may store, for example, information about measurement conditions and input the information about the measurement conditions into the controller 20. This reduces, for example, the processes to be performed by the computation processor 22a, thus improving the processing speed of the controller 20. The measurement conditions may include, for example, the frequency range in the frequency spectrum calculated by the computation processor 22a, the light amount or intensity of irradiation light L1 emitted from the light emitter 11, the period in which the light receiver 12 outputs a signal, the sampling rate in the AD converter 21b, an operation expression for calibration data, and a coefficient of the operation expression.

The external controller 60 may control, for example, the input device 40 and the output device 50. This structure reduces the number of units having various functions (also referred to as functional units) controlled by the controller 20, thus improving the processing speed of the controller 20. The external controller 60 may include, for example, various other functional units including multiple electronic components. Examples of the various other functional units include a pressure gauge and a thermometer. This may improve, for example, the design flexibility and the user convenience of the measurement device 1.

The external controller 60, the controller 20, the input device 40, and the output device 50 may communicate with one another with wires or wirelessly. The controller 20 and the external controller 60 communicate with each other in accordance with, for example, any telecommunications standard. Such telecommunications standards include, for example, Inter-Integrated Circuit (IIC), the Serial Peripheral Interface (SPI), and a universal asynchronous receiver transmitter (UART).

For example, the sensor 10, the signal processor 21, and the external controller 60 may directly communicate with one another. In this case, the measurement device 1 may eliminate the controller 20, and the external controller 60 may serve as the controller 20. For example, the sensor 10 and the external controller 60 may communicate directly with each other to eliminate delays in signal transmission between the controller 20 and the external controller 60. The measurement device 1 can thus have, for example, higher processing speed. This may improve the user convenience of the measurement device 1.

2-3. Fourth Embodiment

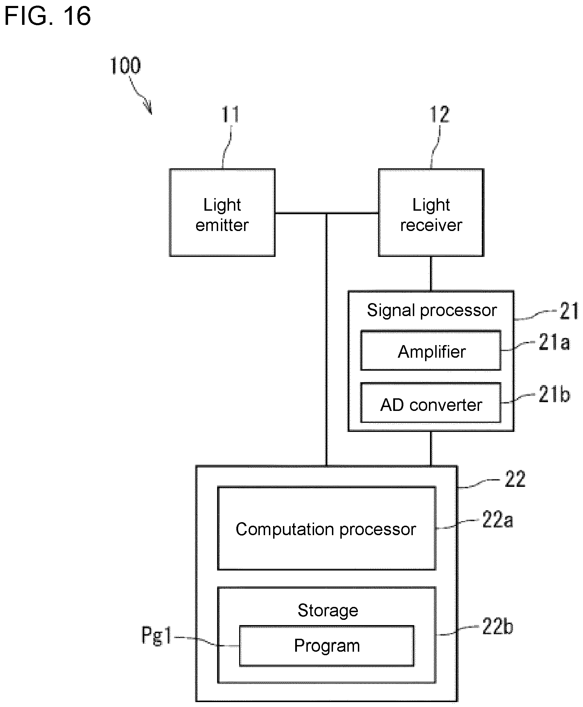

In each of the above embodiments, a measurement system 100 may include all the components or at least two components of the measurement device 1 connected to allow communication between them. In a fourth embodiment, the measurement system 100 includes, for example, the light emitter 11, the light receiver 12, the signal processor 21 including the amplifier 21a and the AD converter 21b, and the information processor 22 including the computation processor 22a and the storage 22b, as illustrated in FIG. 16. In the example of FIG. 16, the light emitter 11 and the light receiver 12, the light emitter 11 and the information processor 22, the light receiver 12 and the signal processor 21, and the signal processor 21 and the information processor 22 are connected to allow communication between them.

3. Others

In each of the above embodiments, for example, the first flow state may be a state in which the flow rate of the fluid 2b is set to a maximum value in its controllable range, and the second flow state may be a state in which the flow rate of the fluid 2b is set to a minimum value in its controllable range. In this case, the usable frequency range is calculated based on, for example, a comparison between the first frequency spectrum $P1(f)$ and the second frequency spectrum $P2(f)$ each including a noise component that may result from the operation of the flow controller such as a pump. This allows the usable frequency range to be easily calculated to include a frequency range in the frequency spectrum in which the signal strength changes due to changes in the flow rate of the fluid 2b, other than noise components, that may be caused by the operation of the flow controller, such as a pump.

For example, the flow rate of the fluid 2b in the first flow state may not be the maximum value in its controllable range, and the flow rate of the fluid 2b in the second flow state may not be the minimum value in its controllable range. However, with the flow rate of the fluid 2b in the first flow state closer to the maximum value in the controllable range, the frequency band in which the signal strength of the frequency spectrum $P(f)$ is more likely to change when the flow rate of the fluid 2b changes by a great value may be more likely to be included in the usable frequency range. This may improve the measurement accuracy of a value quantitatively indicating the flow state of the fluid 2b with, for example, a relatively high flow rate. The larger difference between the flow rate of the fluid 2b in the second flow state and the flow rate of the fluid 2b in the first flow state may be more likely to allow the difference between the first frequency spectrum $P1(f)$ and the second frequency spectrum $P2(f)$ to be notable. This may allow, for example, the usable frequency range to be calculated easily.

In each of the above embodiments, the comparison index value $Vc$ may be calculated by, for example, various calculations using the first frequency spectrum $P1(f)$ and the second frequency spectrum $P2(f)$ in the signal strength comparison.

For example, the comparison index value $Vc$ tends to decrease as the frequency $f$ increases from the reference frequency $fr$ indicating the first maximum signal strength $P1max$. In this case, the upper limit frequency $ful$ may be calculated based on, for example, the similar signal frequency $fn$ at which the comparison index value $Vc$ is less than the predetermined value $Vp$ when the frequency $f$ is higher than the reference frequency $fr$. More specifically, in the signal strength comparison, for example, the comparison index value $Vc$ may be calculated, for each frequency, by dividing the first frequency spectrum $P1(f)$ by the second frequency spectrum $P2(f)$, and the upper limit frequency $ful$ may be calculated based on the similar signal frequency $fn$ at which the comparison index value $Vc$ is less than the predetermined value $Vp$ when the frequency $f$ is higher than the reference frequency $fr$. The predetermined value $Vp$ may be, for example, a value greater than and close to 1. The value greater than and close to 1 is, for example, 1.1.

For example, the comparison index value $Vc$ tends to increase as the frequency $f$ increases from the reference frequency $fr$ indicating the first maximum signal strength $P1max$. In this case, the upper limit frequency $ful$ may be calculated based on, for example, the similar signal frequency $fn$ at which the comparison index value $Vc$ is greater the predetermined value $Vp$ when the frequency $f$ is higher than the reference frequency $fr$. More specifically, in the signal strength comparison, for example, the comparison index value $Vc$ may be calculated, for each frequency, by dividing the second frequency spectrum $P2(f)$ by the first frequency spectrum $P1(f)$, and the upper limit frequency $ful$ may be calculated based on the similar signal frequency $fn$ at which the comparison index value $Vc$ is greater than the predetermined value Vp when the frequency f is higher than the reference frequency fr. The predetermined value Vp may be, for example, a value less than and close to 1. The value less than and close to 1 is, for example, 0.9.

For example, the comparison index value Vc tends to increase as the frequency f decreases. The reference frequency fr is a sufficiently high frequency in the frequency spectrum P1(f) and the second frequency spectrum P2(f). The reference frequency fr is, for example, a maximum value of the frequencies in the first frequency spectrum P1(f) and the second frequency spectrum P2(f). In this case, the upper limit frequency ful may be calculated based on, for example, the similar signal frequency fn at which the comparison index value Vc is greater than or equal to the predetermined value Vp when the frequency f is lower than the reference frequency fr. More specifically, in the signal strength comparison, for example, the comparison index value Vc may be calculated, for each frequency, by dividing the first frequency spectrum P1(f) by the second frequency spectrum P2(f), and the upper limit frequency ful may be calculated based on the similar signal frequency fn at which the comparison index value Vc is greater than or equal to the predetermined value Vp when the frequency f is lower than the reference frequency fr. The predetermined value Vp may be, for example, a value greater than and close to 1. The value greater than and close to 1 is, for example, 1.1.

For example, the comparison index value Vc tends to decrease as the frequency f decreases. The reference frequency fr is a sufficiently high frequency in the frequency spectrum P1(f) and the second frequency spectrum P2(f). The reference frequency fr is, for example, a maximum value of the frequencies in the first frequency spectrum P1(f) and the second frequency spectrum P2(f). In this case, the upper limit frequency ful may be calculated based on, for example, the similar signal frequency fn at which the comparison index value Vc is less than or equal to the predetermined value Vp when the frequency f is lower than the reference frequency fr. More specifically, in the signal strength comparison, for example, the comparison index value Vc may be calculated, for each frequency, by dividing the second frequency spectrum P2(f) by the first frequency spectrum P1(f), and the upper limit frequency ful may be calculated based on the similar signal frequency fn at which the comparison index value Vc is less than or equal to the predetermined value Vp when the frequency f is lower than the reference frequency fr. The predetermined value Vp may be, for example, a value less than and close to 1. The value less than and close to 1 is, for example, 0.9.

In each of the above embodiments, for example, a boundary frequency at which the integrated value of the signal strength calculated at lower frequencies and the integrated value of the signal strength calculated at higher frequencies in the third frequency spectrum P3(f) have a predetermined ratio may be calculated as the mean frequency fm corresponding to the difference frequency fb. The predetermined ratio is set to, for example, 1:1.

In each of the above embodiments, the calibration data may indicate, for example, the relationship between a value obtained by processing the mean frequency fm with a predetermined arithmetic operation (flow calculation value) and a quantitative value for the flow of the fluid 2b (flow quantitative value). In this case, the computation processor 22a can calculate, for example, the value quantitatively indicating the flow state of the fluid 2b (flow quantitative value) based on the flow calculation value obtained by processing the mean frequency fm with the predetermined arithmetic operation and the prepared calibration data.

In each of the above embodiments, the computation processor 22a may eliminate, for example, calculation of the flow quantitative value based on the flow calculation value. The structure also allows a user to monitor a change in the flow state of the fluid 2b based on the change in the flow calculation value. In this case, for example, the flow calculation value may be used as the value quantitatively indicating the flow state of the fluid 2b. This improves, for example, the measurement accuracy of the value quantitatively indicating the flow state of the fluid 2b.

In each of the above embodiments, at least one of the functions of the computation processor 22a may be implemented by hardware such as a dedicated electronic circuit.

The components described in the above embodiments and variations may be entirely or partially combined as appropriate unless any contradiction arises.

REFERENCE SIGNS

    1 measurement device
    2 irradiation target
    2a flow path component
    2b fluid
    2i internal space
    10 sensor
    11 light emitter
    12 light receiver
    20 controller
    21 signal processor

21a amplifier
21b AD converter
22 information processor
22a computation processor
22b storage
40 input device
50 output device
60 external controller
100 measurement system
L1 irradiation light
L2 coherent light
Pg1 program

**Claims**

1. A measurement device, comprising:

   a light emitter configured to irradiate, with light, an irradiation target having a fluid flowing in an internal space of the irradiation target;
   a light receiver configured to receive coherent light including light scattered by the irradiation target and output a signal corresponding to an intensity of the coherent light; and
   a computation processor configured to generate a frequency spectrum for a temporal change in a signal strength of the signal output from the light receiver and calculate, based on the frequency spectrum, a calculation value for a flow state of the fluid flowing in the internal space of the irradiation target,
   wherein the computation processor generates a first frequency spectrum of the signal output from the light receiver with the fluid in a first flow state, generates a second frequency spectrum of the signal output from the light receiver with the fluid in a second flow state in which the fluid has a flow rate lower than in the first flow state, and calculates a usable frequency range to calculate the calculation value based on a comparison between the first frequency spectrum and the second frequency spectrum.

2. The measurement device according to claim 1, wherein
   the first flow state is a state in which the flow rate of the fluid is set to a maximum value in a controllable range.

3. The measurement device according to claim 1 or claim 2, wherein
   the second flow state is a state in which the flow rate of the fluid is set to zero.

4. The measurement device according to any one of claims 1 to 3, further comprising:

   a converter configured to convert the signal output from the light receiver from an analog signal to a digital signal,
   wherein the computation processor calculates a sampling rate in the converter based on the usable frequency range.

5. The measurement device according to any one of claims 1 to 4, wherein
   the computation processor converts the first frequency spectrum into a form of an approximation and calculates the usable frequency range based on a comparison between the first frequency spectrum converted into the form of the approximation and the second frequency spectrum.

6. The measurement device according to any one of claims 1 to 5, wherein
   the computation processor converts the second frequency spectrum into a form of an approximation and calculates the usable frequency range based on a comparison between the second frequency spectrum converted into the form of the approximation and the first frequency spectrum.

7. The measurement device according to any one of claims 1 to 6, further comprising:
   an output device configured to visually output the calculation value calculated by the computation processor.

8. The measurement device according to any one of claims 1 to 6, wherein
   the computation processor calculates a flow quantitative value quantitatively indicating the flow state of the fluid based on the calculation value.

9. The measurement device according to claim 8, further comprising:
an output device configured to visually output the flow quantitative value calculated by the computation processor.

10. A measurement system, comprising:

a light emitter configured to irradiate, with light, an irradiation target having a fluid flowing in an internal space of the irradiation target;
a light receiver configured to receive coherent light including light scattered by the irradiation target and output a signal corresponding to an intensity of the coherent light; and
a computation processor configured to generate a frequency spectrum for a temporal change in a signal strength of the signal output from the light receiver and calculate, based on the frequency spectrum, a calculation value for a flow state of the fluid flowing in the internal space of the irradiation target,
wherein the computation processor generates a first frequency spectrum of the signal output from the light receiver with the fluid in a first flow state, generates a second frequency spectrum of the signal output from the light receiver with the fluid in a second flow state in which the fluid has a flow rate lower than in the first flow state, and calculates a usable frequency range to calculate the calculation value based on a comparison between the first frequency spectrum and the second frequency spectrum.

11. A program executable by a processor included in a measurement device to cause the measurement device to function as the measurement device according to any one of claims 1 to 9.

12. A calibration method for a measurement device, the method comprising:

receiving, with a light receiver, coherent light including light scattered by an irradiation target while irradiating, with a light emitter, the irradiation target having a fluid flowing in an internal space of the irradiation target in a first flow state with light, generating, with a computation processor, a first frequency spectrum for a temporal change in a signal strength of a signal corresponding to an intensity of the coherent light, receiving, with the light receiver, coherent light including light scattered by the irradiation target while irradiating, with the light emitter, the irradiation target having the fluid in the internal space of the irradiation target in a second flow state with light, the second state being a state in which the fluid has a flow rate lower than in the first flow state, and generating, with the computation processor, a second frequency spectrum for a temporal change in a signal strength of a signal corresponding to an intensity of the coherent light; and
calculating, with the computation processor, a usable frequency range to calculate a calculation value for a flow state of the fluid flowing in the internal space of the irradiation target based on a comparison between the first frequency spectrum and the second frequency spectrum.

FIG. 1

## FIG. 2

## FIG. 3

## FIG. 4

Lo2

Frequency

Signal strength

## FIG. 5

Ln1

Frequency (kHz)

Signal strength

FIG. 6

FIG. 7

FIG. 8

FIG. 9

FIG. 10

FIG. 11

## FIG. 12

```
                    ┌───────────┐
                    │   Start   │
                    └─────┬─────┘
                          ↓
┌─────────────────────────────────────────────────────┐
│   Generate first frequency spectrum for first flow   │   ～Sp1
│   state                                              │
│   Generate second frequency spectrum for second      │
│   flow state                                         │
└─────────────────────────┬───────────────────────────┘
                          ↓
┌─────────────────────────────────────────────────────┐
│  Calculate usable frequency range and sampling rate  │   ～Sp2
│  based on comparison between first and second         │
│  frequency spectra                                   │
└─────────────────────────┬───────────────────────────┘
                          ↓
┌─────────────────────────────────────────────────────┐
│       Set usable frequency range and sampling rate   │   ～Sp3
└─────────────────────────┬───────────────────────────┘
                          ↓
                    ┌───────────┐
                    │    End    │
                    └───────────┘
```

## FIG. 13

```
                    ┌───────────┐
                    │   Start   │
                    └─────┬─────┘
                          ↓
┌─────────────────────────────────────────────────────┐
│      Output signal corresponding to light            │   ～St1
│      irradiation                                     │
└─────────────────────────┬───────────────────────────┘
                          ↓
┌─────────────────────────────────────────────────────┐
│  Signal processing (e.g., amplification and AD        │   ～St2
│  conversion)                                         │
└─────────────────────────┬───────────────────────────┘
                          ↓
┌─────────────────────────────────────────────────────┐
│           Calculate flow calculation value           │   ～St3
└─────────────────────────┬───────────────────────────┘
                          ↓
┌─────────────────────────────────────────────────────┐
│          Calculate flow quantitative value           │   ～St4
└─────────────────────────┬───────────────────────────┘
                          ↓
                    ┌───────────┐
                    │    End    │
                    └───────────┘
```

FIG. 14

FIG. 15

FIG. 16

## INTERNATIONAL SEARCH REPORT

International application No.

**PCT/JP2021/033658**

### A.    CLASSIFICATION OF SUBJECT MATTER

*G01F 1/66*(2006.01)i
FI:   G01F1/66 103

According to International Patent Classification (IPC) or to both national classification and IPC

### B.    FIELDS SEARCHED

Minimum documentation searched (classification system followed by classification symbols)

G01F1/00-9/02; G01F25/00; G01P5/00-5/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2018-100968 A (KEIO GIJUKU) 28 June 2018 (2018-06-28)<br>entire text, all drawings | 1-12 |
| A | WO 2015/033469 A1 (PIONEER CORPORATION) 12 March 2015 (2015-03-12)<br>entire text, all drawings | 1-12 |
| A | JP 7-311215 A (TOYOTA CENTRAL RESEARCH & DEVELOPMENT LABORATORIES INCORPORATED) 28 November 1995 (1995-11-28)<br>entire text, all drawings | 1-12 |
| A | US 4284351 A (NATIONAL RESEARCH DEVELOPMENT CORPORATION) 18 August 1981 (1981-08-18)<br>entire text, all drawings | 1-12 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/033658**

| Patent document cited in search report | | | Publication date (day/month/year) | Patent family member(s) | | | Publication date (day/month/year) |
|---|---|---|---|---|---|---|---|
| JP | 2018-100968 | A | 28 June 2018 | (Family: none) | | | |
| WO | 2015/033469 | A1 | 12 March 2015 | EP | 3045876 | A1 | |
| JP | 7-311215 | A | 28 November 1995 | US | 5587785 | A | |
| US | 4284351 | A | 18 August 1981 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5806390 B